# EUROPÄISCHE PATENTANMELDUNG

(11) **EP 2 614 912 A2**
(43) Veröffentlichungstag der Anmeldung: **17.07.2013**
(21) Anmeldenummer: 12188448.0
(22) Anmeldetag: 12.10.2012
(51) Int. Cl.: B23K 7/10, B23K 37/02, B25J 15/02, B23K 7/00

(54) **Brennerhalterung und Brennschneidvorrichtung mit einem zwischen dem Brennerhalter und dem Gehäusearm erstreckenden Untersetzungsgetriebeabschnitt zwischen dem Brennerhalter und dem Gehäusearm**

(30) Priorität: 11.01.2012 DE 202012100095 U
(71) Anmelder: Sato Schneidsysteme Anton Hubert e.K., 41169 Möchengladbach (DE)
(72) Erfinder: Hubert, Anton W., 41179 Mönchengladbach (DE)
(74) Vertreter: Albrecht, Dirk

(57) **Zusammenfassung**

Die Erfindung betrifft eine Brennschneidvorrichtung mit einem Schneidtisch, einem parallel zu der Arbeitsfläche verfahrbaren Träger (13), und einem Brennerkopf (11) zur Erzeugung eines Brennschneidstrahls, der an dem Träger (13) über eine Brennerhalterung (12) angebracht ist, wobei die Brennerhalterung (12) einen an dem Träger (13) um eine Schwenkachse (A) schwenkbar gelagerten Gehäusearm (14) und einen Brennerhalter, welcher den Brennerkopf (11) trägt und um eine Schwenkachse (B) schwenkbar an dem Gehäusearm (14) gelagert ist, aufweist. Dem Brennerhalter ist ein Antrieb zugeordnet, der einen Motor (25), welcher an dem trägerseitigen Endbereich des Gehäusearms (14) vorgesehen ist, und ein Getriebe mit einem Untersetzungsgetriebeabschnitt aufweist. Der Untersetzungsgetriebeabschnitt erstreckt sich zwischen dem Brennerhalter und dem Gehäusearm (14) und ist insbesondere spielfrei gestaltet.

## Beschreibung

Die vorliegende Erfindung betrifft eine Brennschneidvorrichtung mit einem Schneidtisch, der eine Arbeitsfläche aufweist, einem parallel zu der Arbeitsfläche verfahrbaren Träger, und einem Brennerkopf zur Erzeugung eines Brennschneidstrahls, der an dem Träger über eine Brennerhalterung angebracht ist, wobei die Brennerhalterung einen an dem Träger um eine Schwenkachse schwenkbar gelagerten Gehäusearm und einen Brennerhalter, welcher den Brennerkopf trägt und um eine Schwenkachse schwenkbar an dem Gehäusearm gelagert ist, aufweist, wobei die Schwenkachsen des Gehäusearms und des Brennerhalters parallel zur Arbeitsfläche des Schneidtischs verlaufen und senkrecht zueinander stehen, so dass der Brennerkopf durch Verschwenkung des Gehäusearms und des Brennerhalters aus einer zum Schneidtisch senkrechten Stellung in eine Schrägstellung und umgekehrt bringbar ist, und wobei dem Brennerhalter ein Antrieb zum automatischen Verschwenken des Brennerhalters zugeordnet ist, der einen Motor, welcher an dem trägerseitigen Endbereich des Gehäusearms vorgesehen ist, und ein Getriebe mit einem Untersetzungsgetriebeabschnitt, das zumindest teilweise in dem Gehäusearm untergebracht ist und den Motor mit dem Brennerhalter verbindet, aufweist. Des weiteren betrifft die Erfindung eine Brennerhalterung für eine solche Brennschneidvorrichtung.

Brennschneidvorrichtungen dieser Art sind in unterschiedlichen Ausführungsformen bekannt und dienen dazu, Metallplatten mittels eines Brennschneidstrahls zu schneiden. Der Brennschneidstrahl wird dabei in einem Brennerkopf erzeugt, der als Schneidbrenner, Plasmabrenner, Laserbrenner oder dergleichen ausgebildet sein kann.

Eine Brennschneidvorrichtung umfasst generell einen Schneidtisch, der eine Arbeitsfläche bildet, auf welche das jeweils zu schneidende Werkstück in Form einer ebenen Platte oder dergleichen aufgelegt und gegebenenfalls fixiert werden kann. Gewöhnlich erstreckt sich die Auflagefläche in einer horizontalen Ebene.

Oberhalb des Schneidtischs befindet sich ein Brennerwagenträger, welcher den Schneidtisch überspannt. Der Brennerwagenträger stützt sich beidseits des Schneidtischs über Fahrwerke auf dort vorhandenen Schienen ab und ist entlang von diesen quer zur Erstreckung des Brennerwagenträgers verfahrbar. An dem Brennerwagenträger ist wenigstens ein - meist mehrere - Brennerwagen angeordnet, der einen Brennerkopf trägt. Der Brennerwagen ist entlang des Brennerwagenträgers mit Hilfe eines elektrischen Antriebs auf Schienen parallel zu der Auflagefläche des Schneidtischs verfahrbar. Durch Verfahren des Brennerwagenträgers entlang der Schienen und des Brennerwagens entlang des Brennerwagenträgers kann somit der Brennerkopf oberhalb jedes Punktes der Auflagefläche des Schneidtischs positioniert werden, um ein Werkstück zu schneiden. Dies geschieht mit Hilfe einer Steuereinrichtung, die ein Ablaufprogramm aufweist, das die Antriebe für den Brennerwagenträger und den Brennerwagen entsprechend dem gewünschten Schneidverlauf automatisch steuert. Das Ablaufprogramm kann auch durch Eingabe entsprechender Daten verändert werden, um verschiedene Schneidverläufe verwirklichen zu können.

Der Brennerkopf ist an dem Brennerwagen über eine Brennerhalterung angebracht. Diese ist vertikal zum Schneidtisch verfahrbar, um den Abstand des Brennerkopfs zum Werkstück richtig einstellen zu können. Dabei wird der Brennerkopf gewöhnlich so fixiert, dass ein zum Schneidtisch senkrechter Brennstrahl erzeugt wird.

In manchen Fällen besteht jedoch Bedarf, schon beim Schneidvorgang eine schräge Phase an den Kanten des auszuschneidenden Werkstückes zu erzeugen. Hierzu muss der Brennerkopf schräg gestellt werden, um einen entsprechend schräg auf das Werkstück auftreffenden Brennschneidstrahl zu erzeugen. Bei einer Brennschneidvorrichtung, welche aus der DE 295 20 482 bekannt ist, umfasst die Brennerhalterung hierzu einen an dem Brennerwagenträger schwenkbar gelagerten Arm und einen Brennerhalter, welcher den Brennerkopf trägt und wiederum schwenkbar an dem Arm gelagert ist. Dabei liegen die Schwenkachsen des Arms und des Brennerhalters in einer parallel zum Schneidtisch verlaufenden Ebene und senkrecht zueinander, so dass der Brennerkopf durch Verschwenkung des Arms und des Brennerhalters in jede Schrägstellung gegenüber der Auflagefläche des Schneidtischs gebracht werden kann.

Bei einer Weiterentwicklung dieser Brennschneidvorrichtung sind Antriebe vorgesehen, über welche der Brennerhalter und der Arm jeweils automatisch verschwenkt werden können. Der Antrieb für den Brennerhalter umfasst dabei einen Motor, der an dem brennerwagenseitigen Endbereich des Arms angebracht und über ein Getriebe mit dem Brennerhalter verbunden ist. Das Getriebe ist zum Teil innerhalb des Arms untergebracht, welches hierzu gehäuseartig ausgebildet ist, und umfasst einen als Untersetzungsgetriebe fungierenden Getriebeabschnitt, der unmittelbar an dem Motor sitzt und dessen Abtriebswelle in den Gehäusearm ragt. Die Strecke zwischen der Abtriebswelle und der Schwenkachse des Brennerhalters wird über einen Zahnriemen überbrückt.

An der bekannten Konstruktion wird als nachteilig empfunden, dass das Getriebe spielbehaftet ist. Dieses Spiel führt dazu, dass sich die genaue Position und Lage des Brennerkopfs nicht oder nur sehr schwierig einstellen lässt, da insbesondere bei Richtungswechseln Motordrehungen nicht exakt in Bewegungen des Brennerhalters umgesetzt werden. Ferner ist problematisch, dass es auch schwierig ist, die Brennerhalterung so auszurichten, dass der Arm parallel zu der Arbeitsfläche des Schneidtisches liegt und damit der Brennerkopf senkrecht auf die Arbeitsfläche gerichtet ist. Entsprechend ist es derzeit erforderlich, Justagen an dem Brennerwagen bzw. dem Brennerwagenträger vorzunehmen, die sehr aufwändig sind.

Aufgabe der vorliegenden Erfindung ist es daher, die bekannte Brennschneidvorrichtung und Brennerhalterung so auszugestalten, dass eine genaue Einstellung der Position und Lage des Brennerkopfs möglich ist.

Diese Aufgabe ist erfindungsgemäß zunächst bei einer Brennschneidvorrichtung der eingangs genannten Art dadurch gelöst, dass der Untersetzungsgetriebeabschnitt sich zwischen dem Brennerhalter und dem Gehäusearm erstreckt und insbesondere spielfrei gestaltet ist. Der Erfindung liegt damit die Überlegung zugrunde, das Untersetzungsgetriebe unmittelbar vor dem Brennerhalter vorzusehen, so dass die Abtriebswelle des Untersetzungsgetriebeabschnitts den Brennerhalter direkt antreibt. Die Verlagerung der Position des Untersetzungsgetriebes weg von der Motorseite hat zur Folge, dass das dem Motor sowie den vor dem Untersetzungsgetriebe liegenden Getriebeabschnitten immanente Spiel mit der Untersetzung der Drehzahl ebenfalls im gleichen Verhältnis verringert und damit minimiert wird. Üblicherweise beträgt das Untersetzungsverhältnis des Untersetzungsgetriebeabschnitts 100:1, und damit wird auch das Spiel etwa um 80 bis 90% reduziert. Optimale Ergebnisse werden dabei erzielt, wenn ein spielfreies Untersetzungsgetriebe zum Einsatz kommt, welches am Markt beispielsweise von der Firma 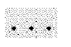 erhältlich ist.

In an sich bekannter Weise kann der Untersetzungsgetriebeabschnitt ein Antriebsrad aufweisen, welches mit einer Abtriebswelle des Motors über einen Zahnriemen gekoppelt ist. Dabei kann der Zahnriemen motorseitig um ein Zahnriemenrad gelegt sein, welches an einer Zwischenwelle fixiert ist, die mit der Antriebswelle des Motors drehfest verbunden und in dem Gehäusearm gelagert ist. Die Abstützung der Zwischenwelle erfolgt dabei zweckmäßigerweise in einer Lagerbohrung des Gehäusearms und zusätzlich in einer an dem Gehäusearm innenseitig befestigten Lagerplatte. Dabei können in an sich bekannter Weise Wälzlager wie beispielsweise Kugellager oder Rollenlager zum Einsatz kommen. Durch diese Art der Lagerung kann die Zwischenwelle präzise und ohne bzw. mit wenig Lagerspiel positioniert werden.

Gemäß einem weiteren Aspekt der vorliegenden Erfindung, der unabhängig von dem Vorhandensein oder der Ausgestaltung eines Antriebs für den Brennerhalter eingesetzt werden kann, ist die der Erfindung zugrunde liegende Aufgabe dadurch gelöst, dass der Gehäusearm an dem Träger über einen Zwischenträger angebracht ist, an welchem der Gehäusearm schwenkbar gehalten ist, wobei der Zwischenträger an dem Träger durch Gelenkmittel kippbar angeordnet ist und Justiermittel vorgesehen sind, um die Lage des Gehäusearms gegenüber dem Schneidtisch einzustellen.

Bei dieser Ausgestaltung ist der Gehäusearm nicht starr mit dem Träger verbunden, sondern kann vielmehr gekippt werden, um den Gehäusearm exakt parallel zu der Arbeitsfläche ausrichten zu können. Hierzu ist der Zwischenträger vorzugsweise durch die Gelenkmittel zumindest im Wesentlichen in der gleichen Schwenkebene kippbar, in welcher der Brennerhalter gegenüber dem Gehäusearm verschwenkt werden kann, wenn der Brennerkopf eine zum Schneidtisch senkrechte Stellung einnimmt. Durch die Verkippung des Zwischenträgers ändert sich zwangsläufig auch der Abstand zwischen dem Brennerkopf und der Arbeitsfläche. Entsprechend ist zweckmäßigerweise der Gehäusearm an einem Schwenkarm fixiert, welcher an dem Zwischenträger schwenkbar gelagert ist und gegenüber dem Schwenkarm in einer Z-Achsenrichtung justierbar, die senkrecht zur Arbeitsfläche gerichtet ist, wenn der Brennerkopf eine zum Schneidtisch senkrechte Stellung einnimmt. Durch die Verstellbarkeit kann der Abstand des Brennerkopfes zur Arbeitsfläche nach der Justierung des Gehäusearms wieder exakt eingestellt werden. Im Ergebnis lässt sich die Position und Lage des Gehäusearms und damit des Brennerkopfes gegenüber der Arbeitsfläche des Schneidtisches mit wenig Aufwand regulieren.

Die Justiermittel können in unterschiedlichen Arten ausgestaltet sein. Gemäß einer Ausführungsform der Erfindung ist vorgesehen, dass die Justiermittel eine in dem Träger ausgebildete Gewindebohrung und ein in dem Zwischenträger vorgesehenes, zu der Gewindebohrung korrespondierendes Langloch aufweist, und dass eine Stellschraube durch das Langloch in die Gewindebohrung des Trägers einschraubbar ist, um den Zwischenträger in Richtung des Trägers zu bewegen. Bei dieser Ausgestaltung durchgreift die Stellschraube den Zwischenträger und wird in die Gewindebohrung des Trägers eingeschraubt. Dabei kommt der Kopf der Stellschraube an dem Zwischenträger in Anlage und drückt diesen in Richtung des Trägers.

Ebenso kann vorgesehen sein, dass die Justiermittel eine in dem Zwischenträger ausgebildete Gewindebohrung umfassen, in welche eine Stellschraube derart eingeschraubt werden kann, dass diese gegen den Träger drückt, um den Zwischenträger von dem Träger wegzudrücken. Bei dieser Ausgestaltung wird die Stellschraube in die Gewindebohrung so weit eingeschraubt, dass sie an der gegenüberliegenden Seite aus dem Zwischenträger tritt und an dem Träger in Anlage kommt. Bei einem weiteren Eindrehen der Stellschraube wird der Zwischenträger von dem Träger weggedrückt.

Das Langloch und/oder die Gewindebohrung sind dabei zweckmäßigerweise oberhalb der Schwenkachsen des Gehäusearms und des Brennerhalters positioniert, wo sie leicht zugänglich sind, insbesondere wenn der Zwischenträger an seiner Oberseite offen ausgebildet ist. Die Gewindebohrung und das Langloch können in horizontaler Richtung nebeneinanderliegend positioniert sein, wobei sie zweckmäßigerweise etwa senkrecht oberhalb der Schwenkachse für den Gehäusearm liegen.

Der Zwischenträger kann dabei einen Aufnahmeraum für Antriebsmittel zum Verschwenken des Gehäusearms aufweisen.

Hinsichtlich weiterer vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt:
- Figur 1: eine schematische Frontansicht einer Brennschneidvorrichtung gemäß der vorliegenden Erfindung,
- Figur 2: eine Brennerhalterung gemäß der vorliegenden Erfindung in perspektivischer Ansicht,
- Figur 3: die Brennerhalterung aus Figur 2 im Horizontalschnitt und

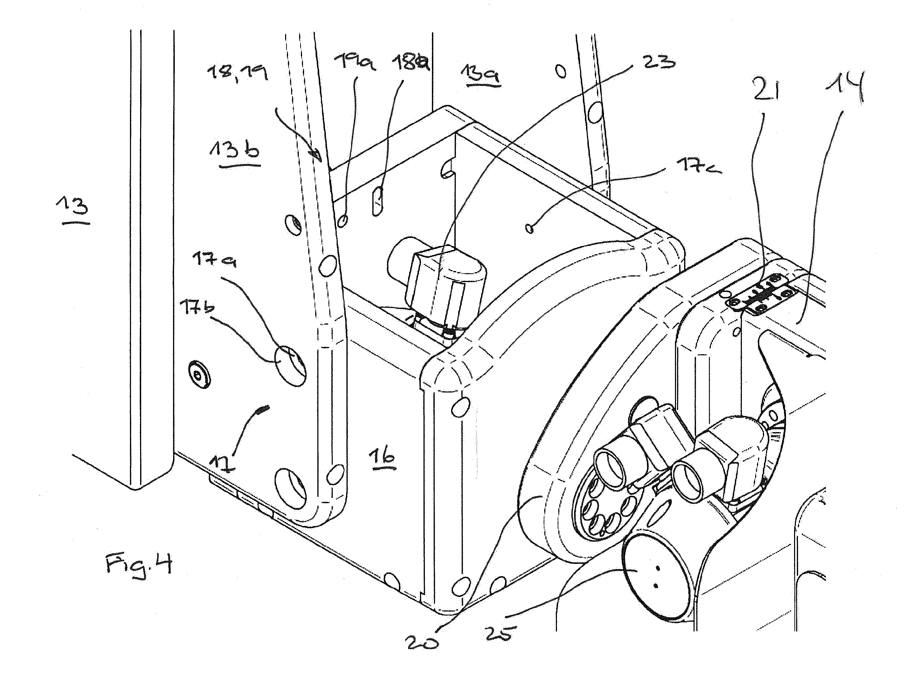

- Figur 4: in perspektivischer Ansicht den Verbindungsbereich zwischen der Brennerhalterung und einem Träger des Brennerwagens von der Rückseite her betrachtet.

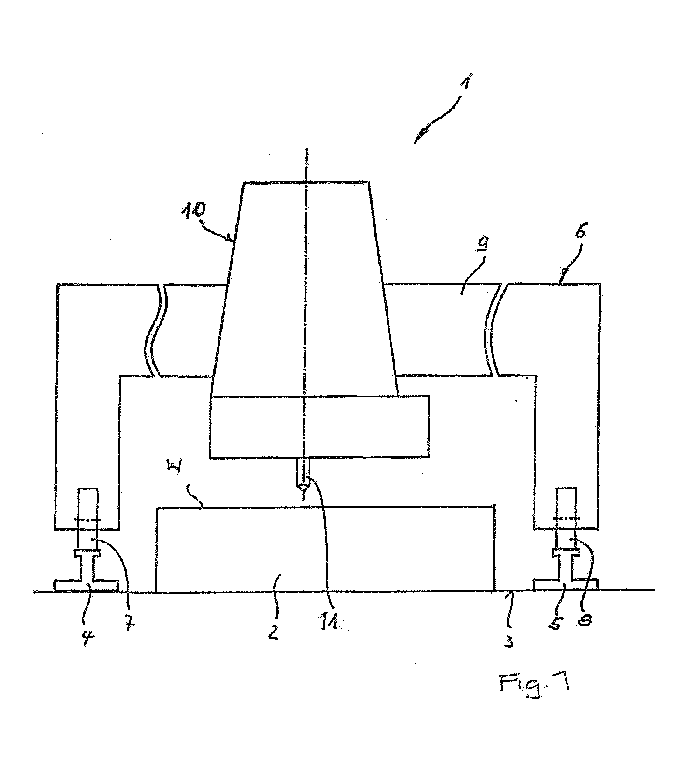

In der Figur 1 ist eine Brennschneidvorrichtung 1 gemäß der vorliegenden Erfindung dargestellt. Diese umfasst einen lediglich umrisshaft dargestellten Schneidtisch 2, der ortsfest auf einem Boden 3 aufliegt und an seiner Oberseite eine Arbeitsfläche W aufweist, auf die ein Werkstück gelegt und, sofern erforderlich, fixiert werden kann. Auf beiden Seiten des Schneidtischs 2 verlaufen Schienen 4, 5, die auf dem Boden 3 aufliegen und sich etwa parallel zu der Auflagefläche W des Schneidtischs 2 erstrecken. Oberhalb des Schneidtischs 2 ist ein Brennerwagenträger 6 angeordnet, welcher den Schneidtisch 2 quer zur Richtung der Schienen 4, 5 überspannt und an den Schienen 4, 5 über entsprechende Fahrwerke 7, 8 abgestützt ist. Über die Fahrwerke 7, 8 ist der Brennerwagenträger 6 längs der Schienen 4, 5, d.h. senkrecht zur Zeichnungsebene, über einen elektromotorischen Antrieb automatisch verfahrbar.

Der Brennerwagenträger 6 hat einen sich parallel zur Auflagefläche W des Schneidtischs 2 erstreckenden Querträger 9, an dem ein Brennerwagen 10 angeordnet ist, der einen Brennerkopf 11 trägt. Der Brennerwagen 10 ist entlang des Querträgers 9 mit Hilfe eines elektrischen Antriebs auf nicht näher dargestellten Schienen parallel zu der Auflagefläche W des Schneidtischs 2 verfahrbar. Die Bewegungsrichtungen des Brennerwagens 10 und die des Brennerwagenträgers 6 stehen dabei senkrecht zueinander und verlaufen in einer horizontalen Ebene. Durch Verfahren des Brennerwagenträgers 6 entlang der Schienen 4, 5 und des Brennerwagens 10 entlang des Brennerwagenträgers 6 kann somit der Brennerkopf 11 oberhalb jedes Punktes der Auflagefläche W des Schneidtischs 2 positioniert werden, um ein Werkstück zu schneiden. Dies geschieht mit Hilfe einer Steuereinrichtung, die ein Ablaufprogramm aufweist, das die Antriebe für den Brennerwagenträger 6 und den Brennerwagen 10 entsprechend dem gewünschten Schneidverlauf automatisch steuert. Das Ablaufprogramm kann auch durch Eingabe entsprechender Daten verändert werden, um verschiedene Schneidverläufe ermöglichen zu können.

Der Brennerkopf 11 ist an dem Brennerwagen 10 über eine Brennerhalterung 12 angebracht. Diese ist vertikal zum Schneidtisch 2 verfahrbar, um den Abstand des Brennerkopfs 11 zum Werkstück richtig einstellen zu können. Konkret ist die Brennerhalterung 12 an einem vertikal verstellbaren Träger 13 des Brennerwagens 10 fixiert.

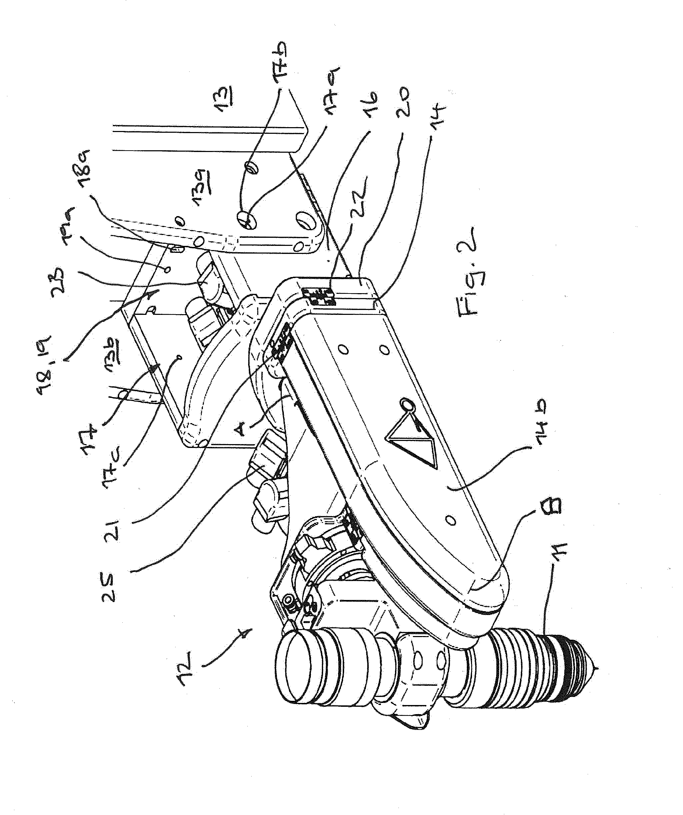

Die Brennerhalterung 12 umfasst einen an dem Träger 13 um eine Schwenkachse A schwenkbar gelagerten Gehäusearm 14 und einen Brennerhalter 15, welcher den Brennerkopf 11 trägt und um eine Schwenkachse B schwenkbar an dem Gehäusearm 14 gelagert ist. Dabei liegen die Schwenkachsen A, B des Gehäusearms 14 und des Brennerhalters 15 in einer parallel zur Auflagefläche W des Schneidtischs 2 verlaufenden - d.h. horizontalen - Ebene und stehen senkrecht zueinander, so dass der Brennerkopf 11 durch Verschwenkung des Gehäusearms 14 und der Brennerhalters 15 aus einer zum Schneidtisch 2 senkrechten Stellung in eine Schrägstellung und umgekehrt bringbar ist. Der Gehäusearm 14 ist an dem Träger 13 verstellbar fixiert, um seine Lage einstellen zu können. Hierzu ist der Gehäusearm 14 an dem Träger 13 über einen Zwischenträger 16 angebracht, der kastenartig mit einer offenen Oberseite ausgebildet und zwischen zwei Streben 13a, 13b des Trägers 13 gehalten ist. Der Zwischenträger 16 ist an dem Träger 13 über ein Kippgelenk 17 um eine horizontale Achse C, die parallel zu der Schwenkachse B des Brennerhalters 15 verläuft, wenn dieser die in Figur 2 dargestellte, zur Auflagefläche W des Schneidtischs 2 senkrechte Stellung einnimmt. Das Kippgelenk 17 wird durch zwei Lagerschrauben 17a gebildet, welche Durchgangsbohrungen 17b in den Streben 13a, 13b des Trägers 13 durchgreifen und in Gewindebohrungen 17c des Zwischenträgers 16 eingeschraubt sind. Wenn die Lagerschrauben 17a leicht gelöst werden, kann der Zwischenträger 16 gegenüber dem Träger 13 gekippt werden.

Des Weiteren sind Justiermittel 18, 19 vorgesehen, um die Lage des Zwischenträgers 16 gegenüber dem Träger 13 und damit dem Schneidtisch 2 einzustellen. Die Justiermittel 18 umfassen eine in dem Träger 13 ausgebildete Gewindebohrung und ein in dem Zwischenträger 16 vorgesehenes, zu der Gewindebohrung korrespondierendes Langloch 18a. Ferner ist eine nicht dargestellte Stellschraube vorgesehen, welche durch das Langloch 18a in die Gewindebohrung des Trägers 13 einschraubbar ist. Bei dem Einschraubvorgang kommt der Kopf der Stellschraube an dem Zwischenträger 16 in Anlage und drückt diesen in Richtung des Trägers 13.

Die Justiermittel 19 umfassen ferner eine in dem Zwischenträger 16 ausgebildete Gewindebohrung 19a, in welche eine Stellschraube derart eingedreht werden kann, dass diese gegen den Träger 13 drückt, um den Zwischenträger 16 von dem Träger 13 wegzudrücken. Durch die beiden Stellschrauben kann somit die Position des Zwischenträgers 16 gegenüber dem Träger 13 exakt eingestellt werden. Das Langloch 18a und die Gewindebohrung 19a sind am oberen Ende des Zwischenträgers 16 positioniert, so dass sie durch die offene Oberseite des Zwischenträgers 16 frei zugänglich sind.

An dem Zwischenträger 16 ist ein Schwenkarm 20 gehalten, an welchem der Gehäusearm 14 angebracht ist und über den der Gehäusearm 14 verschwenkt werden kann. Dabei ist der Gehäusearm 14 gegenüber dem Schwenkarm 20 in einer Z-Achsenrichtung, die senkrecht zur Arbeitsfläche W gerichtet ist, wenn der Brennerkopf 11 eine zum Schneidtisch 2 senkrechte Stellung einnimmt, verstellbar. Hierzu sind an dem Gehäusearm 14 und dem Schwenkarm 20 korrespondierende Führungsmittel 21 sowie Arretiermittel 22, über welche der Gehäusearm 14 an dem Schwenkarm 20 in der gewünschten Position fixiert werden kann, vorgesehen.

Durch die kippbare Anordnung des Zwischenträgers 16 an dem Träger 13 und die Verstellbarkeit des Gehäusearms 14 gegenüber dem Schwenkarm 20 ist es möglich, den Gehäusearm 14 exakt parallel zu der Arbeitsfläche W auszurichten. Hierzu werden zunächst die Lagerschrauben 17a gelöst, und anschließend wird der Zwischenträger 16 durch Eindrehen bzw. Lösen der Stellschrauben derart gegenüber dem Träger 13 gekippt, dass der Gehäusearm 14 eine horizontale Lage einnimmt und damit der Brennerkopf 11 senkrecht auf die Arbeitsfläche W des Schneidtischs 2 gerichtet ist. Durch die Verkippung des Zwischenträgers 16 ändert sich zwangsläufig auch der Abstand zwischen dem Brennerkopf 11 und der Arbeitsfläche W. Diese Abstandsänderung wird korrigiert, indem der Gehäusearm 14 gegenüber dem Schwenkarm 20 entlang der Führungsmittel 21 verstellt wird.

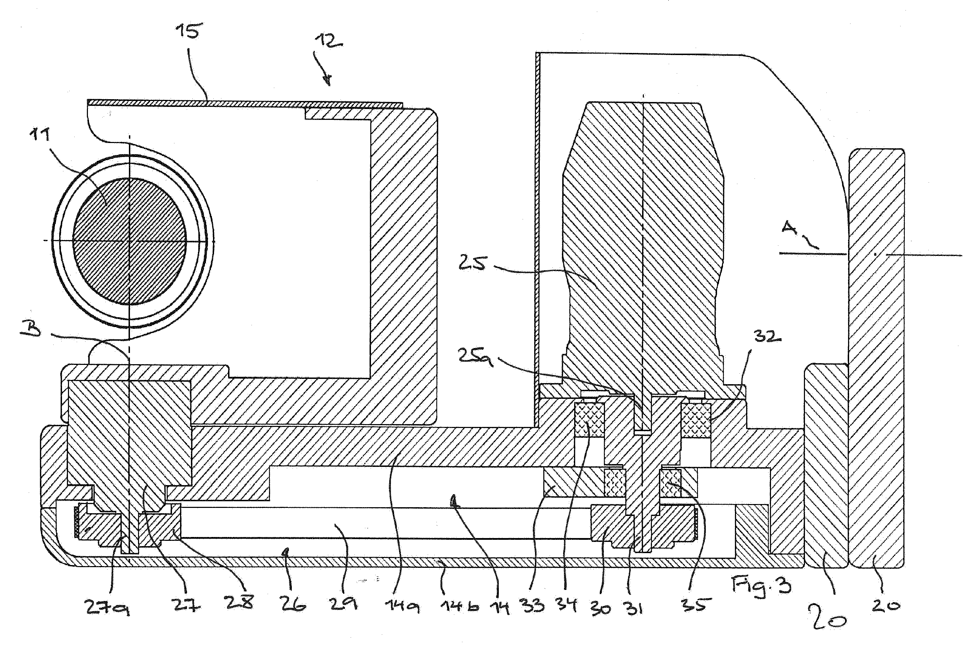

Die Brennschneidvorrichtung besitzt ferner Antriebe 23, 24, über welche der Brennerhalter 15 gegenüber dem Gehäusearm 14 und der Schwenkarm 20 mit dem Gehäusearm 14 gegenüber dem Zwischenträger 16 automatisch verschwenkt werden können. Der Antrieb 23 für den Schwenkarm 20 ist dabei zumindest teilweise in dem Zwischenträger 16 untergebracht. Der Antrieb 24 für den Brennerhalter 15 umfasst einen Motor 25, der an dem brennerwagenseitigen Endbereich des Gehäusearms 14 angebracht und über ein Getriebe 26 mit dem Brennerhalter 15 verbunden ist. Wie in der Figur 3 erkennbar ist, umfasst das Getriebe 26 einen Untersetzungsgetriebeabschnitt 27, der dem Brennerhalter 15 unmittelbar vorgeschaltet ist, so dass die Abtriebswelle 27a des Untersetzungsgetriebeabschnitts 27 den Brennerhalter 15 direkt antreibt. Der Untersetzungsgetriebeabschnitt 27 ist hier mit einem Untersetzungsverhältnis von 100:1 vorgesehen und spielfrei ausgelegt.

An der Antriebswelle 27a des Untersetzungsgetriebeabschnitts 27 ist ein Antriebsrad 28 vorgesehen, welches mit einer Abtriebswelle 25a des Motors 25 über einen Zahnriemen 29 gekoppelt ist, wobei hier das Übersetzungsverhältnis 1:1 beträgt. Der Zahnriemen 29 ist motorseitig um ein Zahnriemenrad 30 gelegt, welches an einer Zwischenwelle 31 fixiert ist, die mit der Abtriebswelle 25a des Motors 25 drehfest verbunden und in dem Gehäusearm 14 gelagert ist. Die Abstützung der Zwischenwelle 31 erfolgt dabei in einer Lagerbohrung 32 des Gehäusearms 14 und zusätzlich in einer an dem Gehäusearm 14 innenseitig befestigten Lagerplatte 33 über Wälzlager 34, 35. Zur Montage des Getriebes 25 ist der Gehäusearm 14 zweiteilig ausgebildet und besteht aus einem Gehäusekörper 14a, welcher an dem Schwenkarm 20 montiert ist, und einem Gehäusedeckel 14b, der zur Montage oder Wartungszwecken von dem Gehäusekörper 14a gelöst werden kann.

Dadurch, dass der Untersetzungsgetriebeabschnitt 27 unmittelbar dem Brennerhalter 15 vorgeschaltet und spielfrei ausgelegt ist, wird das dem Motor 25 sowie den vor dem Untersetzungsgetriebeabschnitt 27 liegenden Getriebeabschnitten immanente Spiel mit der Untersetzung der Drehzahl ebenfalls im gleichen Verhältnis verringert und damit minimiert.

## Patentansprüche

1. Brennschneidvorrichtung mit einem Schneidtisch (2), der eine Arbeitsfläche (W) aufweist, einem parallel zu der Arbeitsfläche (W) verfahrbaren Träger (13), und einem Brennerkopf (11) zur Erzeugung eines Brennschneidstrahls, der an dem Träger (13) über eine Brennerhalterung (12) angebracht ist, wobei die Brennerhalterung (12) einen an dem Träger (13) um eine Schwenkachse (A) schwenkbar gelagerten Gehäusearm (14) und einen Brennerhalter (15), welcher den Brennerkopf (11) trägt und um eine Schwenkachse (15) schwenkbar an dem Gehäusearm (14) gelagert ist, aufweist, wobei die Schwenkachsen (A, B) des Gehäusearms (14) und des Brennerhalters (15) parallel zur Arbeitsfläche (W) des Schneidtischs (2) verlaufen und senkrecht zueinander stehen, so dass der Brennerkopf (11) durch Verschwenkung des Gehäusearms (14) und des Brennerhalters (15) aus einer zum Schneidtisch (2) senkrechten Stellung in eine Schrägstellung und umgekehrt bringbar ist, und wobei dem Brennerhalter (15) ein Antrieb (24) zum automatischen Verschwenken des Brennerhalters (15) zugeordnet ist, der einen Motor (25), welcher an dem trägerseitigen Endbereich des Gehäusearms (14) vorgesehen ist, und ein Getriebe (26) mit einem Untersetzungsgetriebeabschnitt (27), das zumindest teilweise in dem Gehäusearm (14) untergebracht ist und den Motor (25) mit dem Brennerhalter (25) verbindet, aufweist, **dadurch gekennzeichnet, dass** der Untersetzungsgetriebeabschnitt (27) sich zwischen dem Brennerhalter (15) und dem Gehäusearm (14) erstreckt und insbesondere spielfrei gestaltet ist.

2. Brennschneidvorrichtung nach Anspruch 1, **dadurch gekennzeichnet, dass** der Untersetzungsgetriebeabschnitt (27) ein Antriebsrad (28) aufweist, welches mit einer Abtriebswelle (25a) des Motors (25) über einen Zahnriemen (29) gekoppelt ist.

3. Brennschneidvorrichtung nach Anspruch 2, **dadurch gekennzeichnet, dass** der Zahnriemen (29) motorseitig um ein Zahnriemenrad (30) gelegt ist, welches an einer Zwischenwelle (31) fixiert ist, die mit der Abtriebswelle (25a) des Motors (25) drehfest verbunden und in dem Gehäusearm (14) gelagert ist, wobei insbesondere die Zwischenwelle (31) in einer Lagerbohrung (32) des Gehäusearms (14) und zusätzlich in einer an dem Gehäusearm (14) innenseitig befestigten Lagerplatte (33) drehbar gelagert ist, wobei vorzugsweise die Zwischenwelle (31) an dem Gehäusearm (14) und/oder der Lagerplatte (33) durch Wälzlager (34, 35), insbesondere durch Kugellager oder Rollenlager, abgestützt ist.

4. Brennschneidvorrichtung mit einem Schneidtisch (2), der eine Arbeitsfläche (W) aufweist, einem parallel zu der Arbeitsfläche (W) verfahrbaren Träger (13) und einem Brennerkopf (11) zur Erzeugung eines Brennschneidstrahls, der an dem Träger (13) über eine Brennerhalterung (12) angebracht ist, wobei die Brennerhalterung (12) einen Gehäusearm (14), welcher an dem Träger (13) um eine Schwenkachse (A) schwenkbar gelagert ist, und einen Brennerhalter (15), welcher den Brennerkopf (11) trägt und um eine Schwenkachse (B) schwenkbar an dem Gehäusearm (14) gelagert ist, aufweist, wobei die Schwenkachsen (A, B) des Gehäusearms (14) und des Brennerhalters (15) parallel zur Arbeitsfläche des Schneidtischs (2) verlaufen und senkrecht zueinander stehen, so dass der Brennerkopf (11) durch Verschwenkung des Gehäusearms (14) und des Brennerhalters (15) aus einer zum Schneidtisch (2) senkrechten Stellung in eine Schrägstellung und umgekehrt bringbar ist, insbesondere nach einem der vorherigen Ansprüche, **dadurch gekennzeichnet, dass** der Gehäusearm (14) an dem Träger (13) über einen Zwischenträger (16) angebracht ist, an welchem der Gehäusearm (14) schwenkbar gehalten ist, wobei der Zwischenträger (16) an dem Träger (13) durch Gelenkmittel (17) kippbar angeordnet ist und Justiermittel (18, 19) vorgesehen sind, um die Lage des Gehäusearms (14) gegenüber dem Schneidtisch (2) einzustellen.

5. Brennschneidvorrichtung nach Anspruch 4, **dadurch gekennzeichnet, dass** der Zwischenträger (16) durch die Gelenkmittel (17) zumindest im Wesentlichen in der gleichen Schwenkebene kippbar ist, in welcher der Brennerhalter (15) gegenüber dem Gehäusearm (14) schwenkbar ist, wenn der Brennerkopf (11) eine zum Schneidtisch (2) senkrechte Stellung einnimmt.

6. Brennschneidvorrichtung nach Anspruch 4 oder 5, **dadurch gekennzeichnet, dass** die Justiermittel (18) eine in dem Träger (13) ausgebildete Gewindebohrung und ein in dem Zwischenträger (16) vorgesehenes, zu der Gewindebohrung korrespondierendes Langloch (18a) aufweisen, und dass eine Stellschraube durch das Langloch (18a) in die Gewindebohrung des Trägers (13) einschraubbar ist, um den Zwischenträger (16) in Richtung des Trägers (13) zu bewegen und/oder dass die Justiermittel (19) eine in dem Zwischenträger (16) ausgebildete Gewindebohrung (19a) umfassen, in welche eine Stellschraube derart eingeschraubt werden kann, dass diese gegen den Träger (13) drückt, um den Zwischenträger (16) von dem Träger (13) wegzudrücken, wobei insbesondere das Langloch (18a) und/oder die Gewindebohrung (19a) in dem Zwischenträger (16) oberhalb der Schwenkachsen (A, B) positioniert sind.

7. Brennschneidvorrichtung nach Anspruch 6, **dadurch gekennzeichnet, dass** die Gewindebohrung (19a) und das Langloch (18a) in horizontaler Richtung nebeneinanderliegend in dem Zwischenträger (16) positioniert sind.

8. Brennschneidvorrichtung nach einem der Ansprüche 4 bis 7, **dadurch gekennzeichnet, dass** der Zwischenträger (16) an seiner Oberseite offen ist und/oder dass der Zwischenträger (16) einen Aufnahmeraum für Antriebsmittel (22) zum Verschwenken des Gehäusearms (14) aufweist.

9. Brennschneidvorrichtung nach einem der vorigen Ansprüche, **dadurch gekennzeichnet, dass** der Gehäusearm (14) an einem Schwenkarm (20) fixiert ist, welcher an dem Zwischenträger (16) schwenkbar gelagert ist, und gegenüber dem Schwenkarm (20) in einer Z-Achsenrichtung justierbar ist, die senkrecht zur Arbeitsfläche (W) gerichtet ist, wenn der Brennerkopf (11) eine zum Schneidtisch (2) senkrechte Stellung einnimmt.

10. Brennerhalterung zur Anbringung eines Brennerkopfes an einem Träger (13), insbesondere einem Träger (13) eines Brennerwagens (10), einer Brennschneidvorrichtung, mit einem Gehäusearm (14) und einem Brennerhalter (15), welcher Befestigungsmittel zur Anbringung eines Brennerkopfes (11) trägt und um eine Schwenkachse (B) schwenkbar an dem Gehäusearm (14) gelagert ist, und einem Antrieb (24) zum automatischen Verschwenken des Brennerhalters (15), der einen Motor (25), welcher an dem trägerseitigen Endbereich des Gehäusearms (14) vorgesehen ist, und ein Getriebe (26) mit einem Untersetzungsgetriebeabschnitt (27), das zumindest teilweise in dem Gehäusearm (14) untergebracht ist und den Motor (25) mit dem Brennerhalter (15) verbindet, aufweist, **dadurch gekennzeichnet, dass** der Untersetzungsgetriebeabschnitt (27) sich zwischen dem Brennerhalter (15) und dem Gehäusearm (14) erstreckt und insbesondere spielfrei gestaltet ist.

11. Brennerhalterung nach Anspruch 10, **dadurch gekennzeichnet, dass** der Untersetzungsgetriebeabschnitt (27) ein Antriebsrad (28) aufweist, welches mit einer Abtriebswelle (25a) des Motors (25) über einen Zahnriemen (29) gekoppelt ist.

12. Brennerhalterung nach Anspruch 11, **dadurch gekennzeichnet, dass** der Zahnriemen (29) motorseitig um ein Zahnriemenrad (30) gelegt ist, welches an einer Zwischenwelle (31) fixiert ist, die mit der Abtriebswelle (25a) des Motors (25) drehfest verbunden und in dem Gehäusearm (14) gelagert ist, wobei insbesondere die Zwischenwelle (31) in einer Lagerbohrung (32) des Gehäusearms (14) und zusätzlich in einer an dem Gehäusearm (14) innenseitig befestigten Lagerplatte (33) drehbar gelagert ist, und wobei vorzugsweise die Zwischenwelle (31) an dem Gehäusearm (14) und/oder der Lagerplatte (33) durch Wälzlager (34, 35), insbesondere durch Kugellager oder Rollenlager, abgestützt ist.

13. Brennerhalterung zur Anbringung eines Brennerkopfes an einem Träger (13), insbesondere einem Träger (13) eines Brennerwagens (10), einer Brennschneidvorrichtung, mit einem Gehäusearm (14) und einem Brennerhalter (15), welcher Befestigungsmittel zur Anbringung eines Brennerkopfes (11) trägt und um eine Schwenkachse (B) schwenkbar an dem Gehäusearm (14) gelagert ist, insbesondere nach einem der Ansprüche 10 bis 13, **dadurch gekennzeichnet, dass** der Gehäusearm (14) schwenkbar an einem Zwischenträger (16) angebracht ist, der an dem Träger (13) der Brennschneidvorrichtung zu montieren ist, wobei an dem Zwischenträger (16) Gelenkmittel (17), um den Zwischenträger (16) an dem Träger (13) kippbar anzubringen, und Justiermittel (18, 19), um die Lage des Gehäusearms (14) gegenüber dem Träger (13) einzustellen, vorgesehen sind.

14. Brennerhalterung nach Anspruch 20, **dadurch gekennzeichnet, dass** die Gelenkmittel (17) ausgestaltet sind, um den Zwischenträger (16) zumindest im Wesentlichen in der gleichen Schwenkebene zu kippen, in welcher der Brennerhalter (15) gegenüber dem Gehäusearm (14) schwenkbar ist, wenn der Brennerkopf (11) eine zur Arbeitsfläche (W) des Schneidtischs (2) senkrechte Stellung einnimmt.

15. Brennerhalterung nach einem der Ansprüche 13 oder 14, **dadurch gekennzeichnet, dass** die Justiermittel (18) ein zu einer Gewindebohrung des Trägers (13) korrespondierendes Langloch (18a) aufweisen, wobei eine Stellschraube durch das Langloch (18a) in die Gewindebohrung des Trägers (13) einschraubbar ist, um den Zwischenträger (16) in Richtung des Trägers (13) zu bewegen und/oder dass die Justiermittel (19) eine in dem Zwischenträger (16) ausgebildete Gewindebohrung (19a) aufweisen, in welche eine Stellschraube derart eingeschraubt werden kann, dass diese gegen den Träger (13) drückt, um den Zwischenträger (26) von dem Träger (13) wegzudrücken, wobei insbesondere das Langloch (18a) und/oder die Gewindebohrung (19a) oberhalb der Schwenkachse (B) in dem Zwischenträger (16) und/oder die Gewindebohrung (19a) und das Langloch (18a) in horizontaler Richtung nebeneinanderliegend in dem Zwischenträger (16) positioniert sind.
